# EUROPEAN PATENT SPECIFICATION

(11) **EP 3 186 105 B1**
(45) Date of publication and mention of the grant of the patent: **01.08.2018**
(21) Application number: 15770671.4
(22) Date of filing: 07.08.2015
(51) Int. Cl.: B60N 2/90, B60N 2/02, B60N 2/06, B60N 2/08, B60N 2/07

(54) **SEAT DEPTH ADJUSTMENT MECHANISM**
MECHANISMUS ZUR ANPASSUNG DER SITZTIEFE
MÉCANISME DE RÉGLAGE DE PROFONDEUR DE SIÈGE

(43) Date of publication of application: 05.07.2017
(73) Proprietor: Assan Hanil Otomotiv Sanayi Ve Ticaret Anonim Sirketi, Izmit, Kocaeli (TR)
(72) Inventor: ILMAN, Ercan, 41305 Izmit/Kocaeli (TR); AKBABA, Ugur, 41305 Izmit/Kocaeli (TR); ARKIN, Erman, 41305 Izmit/Kocaeli (TR); YURDDAS , Ali Ihsan, 41305 Izmit/Kocaeli (TR); KADAS , Serkan, 41305 Izmit/Kocaeli (TR); GÜNER, Aykut, 41305 Izmit/Kocaeli (TR); YALÇIN, Çagdas, 41305 Izmit/Kocaeli (TR); DEMIREL, Onur Emre, 41305 Izmit/Kocaeli (TR); ÖZCAN, Zafer Serhat, 41305 Izmit/Kocaeli (TR)
(74) Representative: Yamankaradeniz, Kemal
(86) International application number: PCT/TR2015/050059
(87) International publication number: WO 2017/026949

(56) References cited:
- EP-A2- 1 870 277
- DE-A1- 1 680 150
- FR-A- 1 094 483
- GB-A- 947 692
- US-A1- 2012 318 949

## Description

### Technical Field

The invention relates to a seat depth adjustment mechanism which will be used in the vehicle seats.

The invention especially relates to a system, in which seating section of the seat can be adjusted for comfort by being slid back and forth independently of the seat under the user control.

### State of the Art

In one of the systems used in the state of the art, actuator moves by rotating the metal piece. Linear contact operates between the actuator and the metal piece. Abrasions occurring as a result of such an operation way may affect the operation of the system and the effort of the operation.
However, in another product in the state of the art which is used by a firm, the system operates by moving a flexible metal. In regard to the flexible and hollow motion, in said mechanism with lever, the system operates by releasing from the pin fixed in the seat as a result of triggering the lever. In this case, while system operates with low effort in the first level, the effort increases in the further levels. In said system, the button is required to be pulled to the last level to operate. The system does not operate when said button is not pulled fully. A serious effort is needed for the user so as to pull the button to the last level.

In the state of art, patent application numbered EP1870277A2 relates to a seat slide locator for a seat mount assembly on a tractor, riding mower, or off-road utility vehicle.

As a result, due to the drawbacks mentioned above and the inadequacy of the existing solutions, a development is deemed necessary to be made in the related technical field.

### Objects of the Invention

Developed by being inspired of the present conditions, the present invention aims to eliminate the above mentioned drawbacks. that are overcome by a seat depth adjustment mechanism comprising the features of claim 1. The advantages of the system according to the invention over the applications used in the prior art are specified below:
- The system has bearings in the control direction of the user, namely bearings vertical to the direction of the use. This provides the user to manage the system with less force and in the most ergonomic manner.
- Control is achieved with less movement. In other words, while in the current techniques the front section of the foam is largely emptied and an extra cover is used for closing that opening, in the system according to the invention the system can be assembled by emptying a small section of the seat foam. This provides an advantage in terms of space.

In the state of the art, in case the user does not fully lift the drive button and tries to move it forward, the system will not operate and will be damaged. In case this process is continuous, permanent damages may occur. Thanks to the safety lock mechanism available in the system, said user errors and potential damages are prevented. However, in the prior art the button and the locking parts are separate from each other and positioned in a manner that they only linearly contact with each other. In the system according to the invention, on the other hand, the button and the locking part are the same product. Namely, they are one piece. Thus, action is achieved with an additional part in the prior art. Based on these explanations, in the system according to the invention, the system can be disassembled without the need of any additional/second equipment.

To achieve the aforementioned objects, a seat depth adjustment mechanism which is used in the vehicle seat and provides the adjustment of the seat depth of the seat positioned on the frame fixed to the vehicle, wherein said seat depth adjustment mechanism comprises
- a level adjustment part connectable to said frame;
- fixing holes formed on said level adjustment part;
- a locking arm, the front end of which is moved upward by the user before the seat is moved forward or backward by the user in order to provide the adjustment of the seat depth; which is positioned in the front edge of the seat and extends in a parallel direction to the side edges of the seat
- at least one locking spring which returns the locking arm to its initial position when the user force applied to said locking arm is removed and which is connected with said locking arm;
- a fixing protrusion which is formed on said locking arm, and is positioned inside said fixing hole when said locking spring returns the locking arm to its initial position in order to provide said seat to be fixed to the frame;
- an arm movement space which provides the connection of said locking arm to the level adjustment part and the downward and upward movement of the locking arm, through which locking arm passes and which is formed in the front edge of said seat;
- a shaft on which said locking spring is positioned;
- shaft connectors connecting said shaft to the seat.

In a preferred embodiment of the invention, said mechanism is characterized in that
- said locking spring is the right locking spring and/or left locking spring.

In a preferred embodiment of the invention, said mechanism is characterized by
- a button which provides the user to move the locking arm and is connected with said locking arm.

In a preferred embodiment of the invention, said mechanism is characterized by
- an arm and a button fixing element which interconnects said locking arm and said button.

In a preferred embodiment of the invention, said mechanism is characterized by
- a shaft connector retainer which fixes said shaft connector to the seat.

In a preferred embodiment of the invention, said mechanism is characterized by
- at least one movement channel formed in the side edges of said seat;
- a slide on which said movement channel moves during the forward and backward movement of the seat on the frame by the user and which is fixed to said frame.

In a preferred embodiment of the invention, said mechanism is characterized by
- a connector which fixes the seat to the frame and is positioned in said movement channel;
- a seat fixing element which fixes said connector to the frame;
- a fixing element which fixes said seat fixing element to the frame; and
- a return spring which provides said connector to be assembled to and disassembled from seat fixing element.

In a preferred embodiment of the invention, said mechanism is characterized in that
- said arm and button fixing element is a screw.

In a preferred embodiment of the invention, said mechanism is characterized in that
- said connector is a nut.

In a preferred embodiment of the invention, said mechanism is characterized in that
- said seat fixing element is a shaft.

In a preferred embodiment of the invention, said mechanism is characterized by
- a retaining element made of plastic which is positioned on said seat at the end point of said movement channel in the rear edge direction of the seat.

The structural and characteristic features and all the advantages of the present invention will be more clearly understood thanks to the figures below and the detailed description written with reference to those figures; therefore, the evaluation needs to be done by taking said figures and the detailed description into consideration.

### Figures to Facilitate Understanding of the Invention

Figure 1 is the disassembled top perspective view of the seat depth adjustment mechanism according to the invention.
Figure 2a is the assembled top perspective view of the seat depth adjustment mechanism according to the invention.
Figure 2b is the assembled top perspective detailed view of the seat depth adjustment mechanism according to the invention.
Figure 2c is the bottom perspective view of the seat depth adjustment mechanism according to the invention when assembled, which also shows the level adjustment part fixed to the frame.
Figure 3a is the view of the seat depth adjustment mechanism in the locked position.
Figure 3b is the view of the seat depth adjustment mechanism in the unlocked position.
Figure 4 shows a drawing of the safety lock system which prevents the seat group from separating from the frame in an uncontrolled manner in the seat depth adjustment mechanism according to the invention.
Figure 5 is a detailed view of the safety lock system which prevents the seat group from separating from the frame in an uncontrolled manner in the seat depth adjustment mechanism according to the invention.
Figure 6a is the drawing which shows adjustment of the seat to the rearmost position on the frame and which also illustrates the safety lock system.
Figure 6b is another drawing which shows adjustment of the seat to the middle position on the frame and which also illustrates the safety lock system.
Figure 7 is the drawing which shows the way of disassembly of the seat from the frame.

### Description of the Part References

1. Seat
   111. Movement channel
   112. Arm movement hole
2. Locking arm
   21. Fixing protrusion
3. Left locking spring
4. Right locking spring
5. Arm and button fixing element (screw)
6. Shaft connector retainer
7. Shaft connector
8. Button
9. Retaining element
10. Shaft
13. Slide
14. Connector
15. Return spring
16. Seat fixing element
17. Fixing element
18. Frame
19. Level adjustment part
   191. Fixing hole

Seat front edge: A
Seat rear edge: B
Seat side edge: C

Scaling of drawings is not absolutely required and details, which are not needed for understanding the present invention, may have been neglected. Furthermore, elements, which are at least substantially identical or have at least substantially identical functions, are indicated with the same number.

### Detailed Description of the Invention

In this detailed description of the invention, the preferred embodiments of the seat depth adjustment mechanism are described only for a better understanding of the invention.

The seat depth adjustment mechanism according to the invention may comprise the following components:
- Seat (1),
- Movement channel (111),
- Arm movement space (112),
- Locking arm (2),
- Fixing protrusion (21),
- Left locking spring (3),
- Right locking spring (4),
- Arm and button fixing element (5),
- Shaft connector retainer (6),
- Shaft connector (7),
- Button (8),
- Retaining element (9),
- Shaft (10),
- Slide (13),
- Connector (14),
- Return spring (15),
- Seat fixing element (16),
- Fixing protrusion (17),
- Frame (18),
- Level adjustment part (19),
- Fixing hole (191).

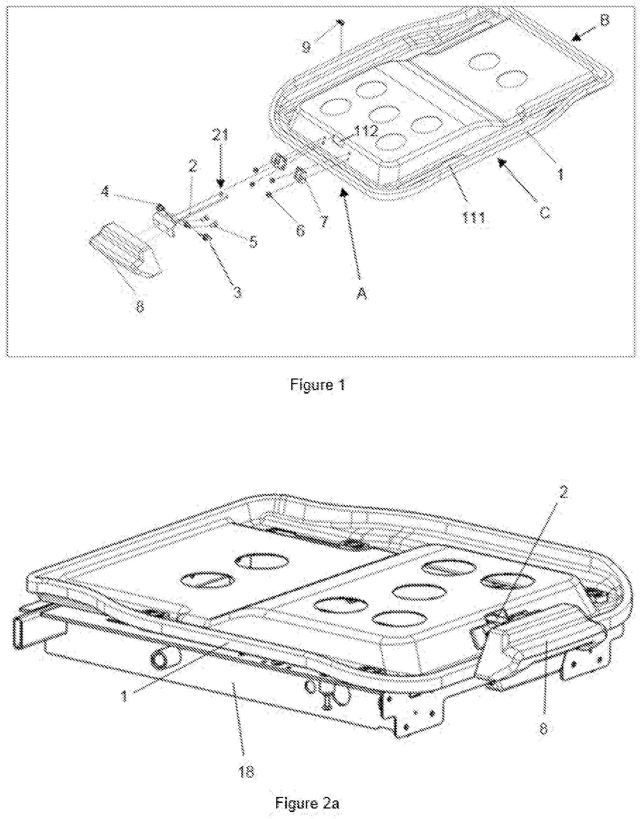

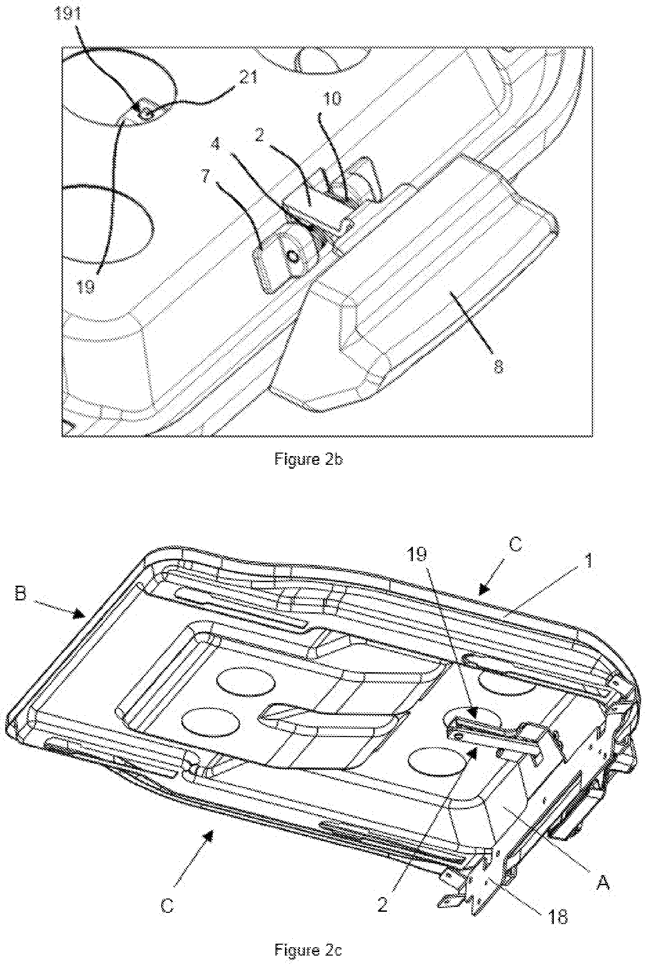

Disassembled top perspective view of the seat depth adjustment mechanism according to the invention is given in Figure 1; assembled top perspective view of the seat depth adjustment mechanism is given in Figure 2a; assembled top perspective detailed view of the seat depth adjustment mechanism is given Figure 2b; and bottom perspective view of the seat depth adjustment mechanism according to the invention when assembled, which also shows the level adjustment part (19) fixed to the frame (18) is given in Figure 2c.

Seat (1) is the movable part on which the user sits and which can be moved forward and backward. Frame (18), on the other hand, is the fixed part which is fixed to the car. Seat (1) can be moved forward and backward on the frame. Button (8) and locking arm (2) are fixed to each other by means of the arm and button fixing elements (5) which are preferably screw. Downward and upward movement of the button (8) and the locking arm (2) passing through the arm movement space (112) is provided by means of the shaft (10) and left locking spring (3) and right locking spring (4) positioned on the shaft (10). Left locking spring (3) and right locking spring (4) also provide the button (8) and the locking arm (2) to return to their former position after the movement. Shaft (10) is fixed to the seat (1) by means of the shaft connectors (7) from its two ends. Shaft connectors (7) also center the locking arm (2) into the arm movement space (112). Shaft connectors (7) are fixed to the seat (1) by means of the shaft connectors retainers (6).

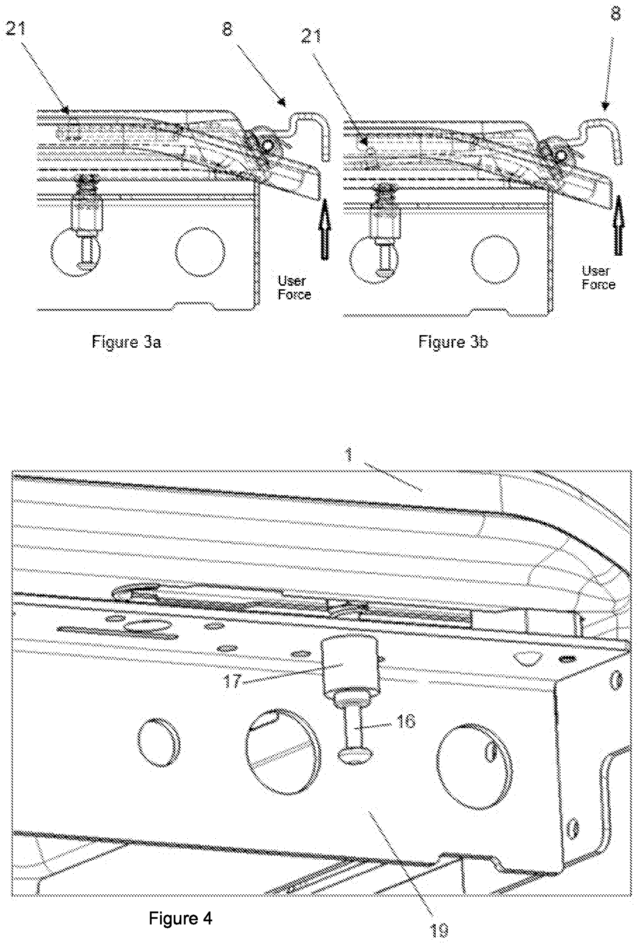

Fixing protrusion (21) is formed on the locking arm (2). Level adjustment part (19) is fixed to the frame (18). Fixing holes (191), however, are formed on the level adjustment part (19). Movement of the seat (1) on the frame (18) is provided by removing the fixing protrusion (21) from the fixing hole (191) and sliding the seat (1) forward and backward on the frame. Fixing the seat (1) on the frame (18), namely ending the movement thereof on the frame (18), is achieved by fitting the fixing protrusion (21) into the desired fixing hole (191) (Figure 2b, Figure 2c). Thereby, seat depth is adjusted. In Figure 3b, when user force is applied to the button (8), upward movement of the button (8) and downward movement of the fixing protrusion (21) on the locking arm (2) fixed to the button (8) are seen. When the user force applied to the button (8) is removed, however, button (8) and locking arm (2) move in the opposite direction by means of the left locking spring (3) and right locking spring (4) (Figure 3a) and return to their former positions in horizontal position.

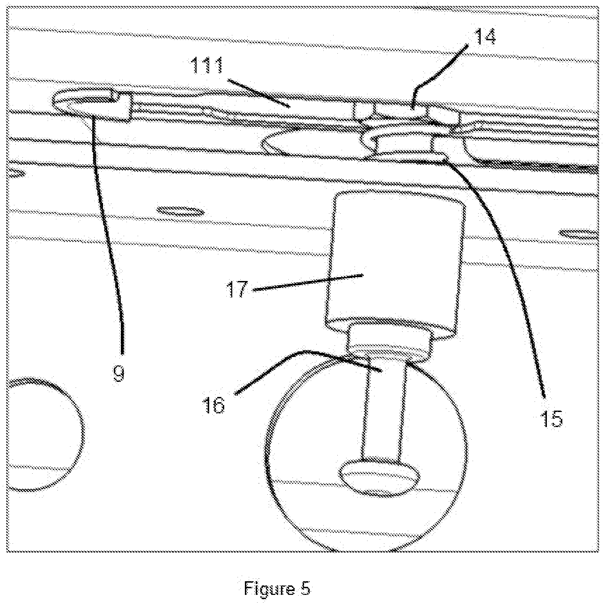

Figure 4 shows a drawing of the safety lock system which prevents the seat (1) from separating from the frame (18) in an uncontrolled manner and Figure 5 shows a detailed drawing of the safety lock system.

Safety lock system consists of a movement channel (111) formed on the seat (1); slide (13) on which said movement channel (111) moves; connector (14); seat fixing element (16) fixed to the connector (14); fixing element (17) fixing the seat fixing element (16); and retaining element (9). Moreover, return spring (15) is positioned on the seat fixing element (16). However, retaining element (9) is positioned in the end point of the movement channel (111). Connector (14) is preferably nut, seat fixing element (16) is preferably pin and fixing element (17) is preferably pin bearing. Said safety lock system is provided in preferably 4 corners of the seat (1).

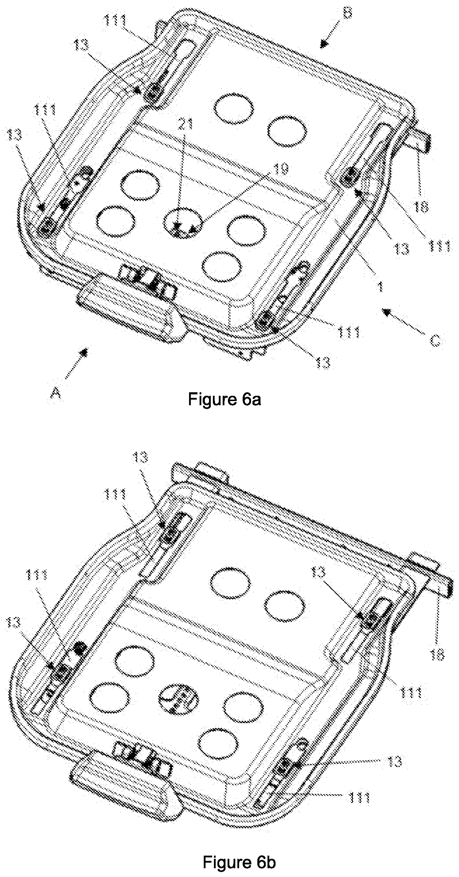

The drawing which shows adjustment of the seat (1) to the rearmost position on the frame (18) and which also illustrates the safety lock system is given in Figure 6a and the drawing which shows adjustment of the seat (1) to the middle position on the frame (18) is given in Figure 6b. While the seat (1) is in its position in Figure 6a, the button (8) is pushed and the fixing protrusion (21) is removed from the fixing hole (191) and the seat (1) is pulled forward. During this pulling, movement channel (111) moves on the slide (13) and sliding of the seat (1) on the frame (18) and also displacement of the seat (1) from the frame (18) are prevented. In the exactly opposite movement, namely pushing of the seat (1) backward, the same processes are performed. In case the connector (14) reaches to the end points of the movement channel (111), the retaining element (9) preferably made of plastic prevents the connector (14) from contacting with the end point section of the movement channel (111) of the seat (1) in the rear edge (B) direction of the seat (1). Connector (14) strikes to the retaining element (9) instead of the seat (1). Thereby, retaining element (9) both prevents the sound likely to occur during contact and provides comfort during said striking.

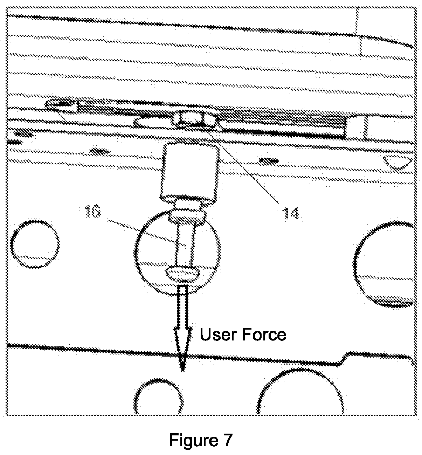

Fixing protrusion (17) is a part connected to the frame (18). Seat fixing element (16) is fitted through the fixing element (17). Afterwards, return spring (15) and connector (14) are assembled to the seat fixing element (16) from the top. Thus, when the seat fixing element (16) is pulled downward, the connector (14) disposed in the top section will be separated from the seat (1) and the seat (1) is allowed to be removed. When the seat fixing element (16) is released, on the other hand, thanks to the return spring (15) the seat fixing element (16) returns to its former position. Seat (1) cannot be assembled in this position. When the seat (1) is desired to be reassembled to its place, namely to the frame (18), the seat fixing element (16) will again be pulled downward and then the seat (1) will be assembled to the system and when the seat fixing element (16) is released, the seat (1) will be assembled to its place (Figure 5, Figure 7).

## Claims

1. A seat depth adjustment mechanism which is used in the vehicle seats and provides the adjustment of the seat depth of the seat (1) positioned on the frame (18) fixed to the vehicle, comprising
- a level adjustment part (19) connectable to said frame (18);
- fixing holes (191) formed on said level adjustment part (19);
- a locking arm (2), the front end of which is moved upward by the user before the seat is moved forward or backward by the user in order to provide the adjustment of the seat depth; which is positioned in the front edge (A) of the seat (1) and extends in a parallel direction to the side edges (C) of the seat (1)
- at least one locking spring which returns the locking arm (2) to its initial position when the user force applied to said locking arm (2) is removed and which is connected with said locking arm (2);
- a fixing protrusion (21) which is formed on said locking arm (2), and is positioned inside said fixing hole (191) when said locking spring returns the locking arm (2) to its initial position in order to provide said seat (1) to be fixed to the frame (18);
- an arm movement space (112) which provides the connection of said locking arm (2) to the level adjustment part (19) and the downward and upward movement of the locking arm (2), through which locking arm (2) passes and which is formed in the front edge of said seat (1);
- a shaft (10) on which said locking spring is positioned;
- shaft connectors (7) for connecting said shaft (10) to the seat (1).

2. The seat depth adjustment mechanism as in Claim 1, **characterized in that**
- said locking spring is the right locking spring (4) and/or left locking spring (3).

3. The seat depth adjustment mechanism as in Claim 1 or 2, **characterized by**
- a button (8) which provides the user to move the locking arm (2) and is connected with said locking arm (2).

4. The seat depth adjustment mechanism as in Claim 3, **characterized by**
- an arm and a button fixing element (5) which interconnects said locking arm (2) and said button (8).

5. The seat depth adjustment mechanism as in Claim 1, **characterized by**
- a shaft connector retainer (6) which fixes said shaft connector (7) to the seat (1).

6. The seat depth adjustment mechanism as in Claim 1, **characterized by**
- at least one movement channel (111) formed in the side edges of said seat (1);
- a slide (13) on which said movement channel (111) moves during the forward and backward movement of the seat (1) on the frame (18) by the user and which is fixed to said frame (18).

7. The seat depth adjustment mechanism as in Claim 6, **characterized by**
- a connector (14) which fixes the seat (1) to the frame (18) and is positioned in said movement channel (111);
- a seat fixing element (16) which fixes said connector (14) to the frame (18);
- a fixing element (17) which fixes said seat fixing element (16) to the frame (18);
- a return spring (15) which provides said connector (14) to be assembled to and disassembled from seat fixing element (16).

8. The seat depth adjustment mechanism as in Claim 4, **characterized in that**
- said arm and button fixing element (5) is a screw.

9. The seat depth adjustment mechanism as in Claim 7, **characterized in that**
- said connector (14) is a nut.

10. The seat depth adjustment mechanism as in Claim 7, **characterized in that**
- said seat fixing element (16) is a pin.

11. The seat depth adjustment mechanism as in Claim 7, **characterized by**
- a retaining element (9) made of plastic which is positioned on said seat (1) at the end point of said movement channel (111) in the rear edge (B) direction of the seat (1).

## Patentansprüche

1. Sitztiefenverstellmechanismus, der in den Fahrzeugsitzen verwendet wird und die Einstellung der Sitztiefe des Sitzes (1) bereitstellt, der auf dem am Fahrzeug befestigten Rahmen (18) positioniert wird, umfassend
- einen mit dem Rahmen (18) verbindbaren Höhenverstellteil (19);
- auf dem Höhenverstellteil (19) ausgebildete Befestigungslöcher (191);
- einen Verriegelungsarm (2), dessen vorderes Ende durch den Benutzer aufwärts bewegt wird, bevor der Sitz durch den Benutzer nach vorne oder nach hinten bewegt wird, um die Einstellung der Sitztiefe bereitzustellen; der in der Vorderkante (A) des Sitzes (1) und in einer parallelen Richtung zu den Seitenkanten (C) des Sitzes (1) angeordnet wird
- mindestens eine Verriegelungsfeder, die den Verriegelungsarm (2) in seine Anfangsstellung zurückstellt, wenn die auf den Verriegelungsarm (2) angewendete Benutzerkraft aufgehoben wird und die mit dem Verriegelungsarm (2) verbunden wird;
- einen Befestigungsvorsprung (21), der auf dem Verriegelungsarm (2) ausgebildet wird und innerhalb des Befestigungslochs (191) positioniert wird, wenn die Verriegelungsfeder den Verriegelungsarm (2) zu seiner Anfangsstellung zurückstellt, um den an den Rahmen (18) zu befestigenden Sitz (1) bereitzustellen;
- einen Armbewegungsraum (112), der die Verbindung des Verriegelungsarms (2) zu dem Höhenverstellteil (19) und die Abwärts- und Aufwärtsbewegung des Verriegelungsarms (2) bereitstellt, durch den der Verriegelungsarm (2) hindurchgeht und der in der Vorderkante des Sitzes (1) ausgebildet wird;
- eine Welle (10), auf der die Verriegelungsfeder positioniert wird;
- Wellenverbinder (7) zum Verbinden der Welle (10) mit dem Sitz (1).

2. Sitztiefenverstellmechanismus nach Anspruch 1, **dadurch gekennzeichnet, dass** die Verriegelungsfeder die rechte Verriegelungsfeder (4) und/oder linke Verriegelungsfeder (3) ist.

3. Sitztiefenverstellmechanismus nach Anspruch 1 oder 2, **gekennzeichnet durch** einen Knopf (8), der bereitstellt, dass der Benutzer den Verriegelungsarm (2) versetzen kann und mit dem Verriegelungsarm (2) verbunden wird.

4. Sitztiefenverstellmechanismus nach Anspruch 3, **gekennzeichnet durch** einen Arm und ein Knopfbefestigungselement (5), das den Verriegelungsarm (2) und den Knopf (8) verbindet.

5. Sitztiefenverstellmechanismus nach Anspruch 1, **gekennzeichnet durch** eine Wellenverbinderhalterung (6), die den Wellenverbinder (7) an den Sitz (1) festsetzt.

6. Sitztiefenverstellmechanismus nach Anspruch 1, **gekennzeichnet durch**
- mindestens einen Bewegungskanal (111), der in den Seitenkanten des Sitzes (1) ausgebildet wird;
- einen Schlitten (13), auf dem sich der Bewegungskanal (111) während der Vorwärts- und Rückwärtsbewegung des Sitzes (1) auf dem Rahmen (18) durch den Benutzer bewegt und der an dem Rahmen (18) befestigt wird.

7. Sitztiefenverstellmechanismus nach Anspruch 6, **gekennzeichnet durch**
- einen Verbinder (14), der den Sitz (1) an den Rahmen (18) befestigt und in dem Bewegungskanal (111) positioniert wird;
- ein Sitzbefestigungselement (16), das den Verbinder (14) an den Rahmen (18) befestigt;
- ein Befestigungselement (17), das das Sitzbefestigungselement (16) an den Rahmen (18) befestigt;
- eine Rückholfeder (15), die bereitstellt, dass der Verbinder (14) von dem Sitzbefestigungselement (16) montiert und demontiert werden kann.

8. Sitztiefenverstellmechanismus nach Anspruch 4, **dadurch gekennzeichnet, dass**
- der Arm und das Knopfbefestigungselement (5) eine Schraube sind.

9. Sitztiefenverstellmechanismus nach Anspruch 7, **dadurch gekennzeichnet, dass**
- der Verbinder (14) eine Mutter ist.

10. Sitztiefenverstellmechanismus nach Anspruch 7, **dadurch gekennzeichnet, dass**
- das Sitzbefestigungselement (16) ein Stift ist.

11. Sitztiefenverstellmechanismus nach Anspruch 7, **gekennzeichnet durch**
- ein aus Kunststoff hergestelltes Rückhalteelement (9), das auf dem Sitz (1) an dem Endpunkt des Bewegungskanals (111) in der Richtung der Hinterkante (B) des Sitzes (1) positioniert wird.

## Revendications

1. Mécanisme de réglage de profondeur de siège qui est utilisé dans les sièges de véhicule et permet le réglage de la profondeur de siège du siège (1) positionné sur le cadre (18) fixé au véhicule, comprenant
- une partie de réglage de niveau (19) pouvant se raccorder au cadre (18) ;
- des trous de fixation (191) formés sur ladite partie de réglage de niveau (19) ;
- un bras de verrouillage (2), dont l'extrémité avant est déplacée vers le haut par l'utilisateur avant que le siège ne soit déplacé vers l'avant ou vers l'arrière par l'utilisateur afin d'obtenir le réglage de la profondeur de siège ; qui est positionné dans le bord avant (A) du siège (1) et s'étend selon une direction parallèle aux bords latéraux (C) du siège (1)
- au moins un ressort de verrouillage qui ramène le bras de verrouillage (2) à sa position initiale lorsque la force de l'utilisateur appliquée audit bras de verrouillage (2) est supprimée et qui est relié avec ledit bras de verrouillage (2) ;
- une saillie de fixation (21) qui est formée sur ledit bras de verrouillage (2) et est positionnée à l'intérieur dudit trou de fixation (191) lorsque ledit ressort de verrouillage ramène le bras de verrouillage (2) à sa position initiale afin de permettre audit siège (1) d'être fixé audit cadre (18) ;
- un espace de mouvement de bras (112) qui permet le raccord dudit bras de verrouillage (2) à la partie réglage de niveau (19) et le mouvement vers le bas et vers le haut du bras de verrouillage (2), à travers lequel ledit bras de verrouillage (2) passe et qui est formé dans le bord avant du siège (1) ;
- un arbre (10) sur lequel ledit ressort de verrouillage est positionné ;
- les raccords d'arbre (7) pour le raccordement dudit arbre (10) au siège (1).

2. Mécanisme de réglage de profondeur de siège selon la revendication 1, **caractérisé en ce que**
- ledit ressort de verrouillage est le ressort de verrouillage droit (4) et/ou le ressort de verrouillage gauche (3).

3. Mécanisme de réglage de profondeur de siège selon la revendication 1 ou 2, **caractérisé par**
- un bouton (8), qui permet à l'utilisateur de déplacer le bras de verrouillage (2) et est raccordé audit bras de verrouillage (2).

4. Mécanisme de réglage de profondeur de siège selon la revendication 3, **caractérisé par**
- un élément de fixation de bouton et de bras (5) qui relie ledit bras de verrouillage (2) et ledit bouton (8).

5. Mécanisme de réglage de profondeur de siège selon la revendication 1, **caractérisé par**
- un élément de retenue de raccord d'arbre (6) qui fixe ledit raccord d'arbre (7) au siège (1).

6. Mécanisme de réglage de profondeur de siège selon la revendication 1, **caractérisé par**
- au moins un canal de mouvement (111) formé dans les bords latéraux dudit siège (1) ;
- un coulisseau (13) sur lequel ledit canal de mouvement (111) se déplace durant le mouvement vers l'arrière et vers l'avant du siège (1) sur le cadre (18) par l'utilisateur et qui est fixé audit cadre (18).

7. Mécanisme de réglage de profondeur de siège selon la revendication 6, **caractérisé par**
- un raccord (14) qui fixe le siège (1) au cadre (18) et est positionné dans ledit canal de mouvement (111) ;
- un élément de fixation de siège (16) qui fixe ledit raccord (14) au cadre (18) ;
- un élément de fixation (17), qui fixe ledit élément de fixation de siège (16) au cadre (18) ;
- un ressort de rappel (15) qui permet audit raccord (14) d'être assemblé ou désassemblé dudit élément de fixation de siège (16).

8. Mécanisme de réglage de profondeur de siège selon la revendication 4, **caractérisé en ce que**
- ledit élément de fixation de bras et de bouton (5) est une vis.

9. Mécanisme de réglage de profondeur de siège selon la revendication 7, **caractérisé en ce que**
- ledit raccord (14) est un écrou.

10. Mécanisme de réglage de profondeur de siège selon la revendication 7, **caractérisé en ce que**
- ledit élément de fixation de siège (16) est une broche.

11. Mécanisme de réglage de profondeur de siège selon la revendication 7, **caractérisé par**
- un élément de retenue (9) composé de plastique qui est positionné sur ledit siège (1) au niveau du point d'extrémité dudit canal de mouvement (111) selon la direction de bord arrière (B) du siège (1).
